Europäisches Patentamt

European Patent Office

Office européen des brevets

(11) Publication number: **0 358 387**
**A1**

(12) **EUROPEAN PATENT APPLICATION**

(21) Application number: 89308626.4

(22) Date of filing: 24.08.89

(51) Int. Cl.⁵: **G01F 25/00 , A01M 7/00**

(30) Priority: 05.09.88 GB 8820841
03.11.88 GB 8825697
03.07.89 GB 8915221

(43) Date of publication of application:
14.03.90 Bulletin 90/11

(84) Designated Contracting States:
AT BE CH DE ES FR GB GR IT LI LU NL SE

(71) Applicant: NOMIX MANUFACTURING
COMPANY LIMITED
Portland Building Portland Street
Staple Hill Bristol BS16 4PS(GB)

(72) Inventor: Gill, David Charles
Wellfield House Parkhouse Lane
Keynsham Bristol BS18 2SG(GB)

(74) Representative: Cheyne, John Robert
Alexander Mackenzie et al
HASELTINE LAKE & CO. Hazlitt House 28,
Southampton Buildings Chancery Lane
London WC2A 1AT(GB)

(54) **A device for measuring flow.**

(57) . Fluid delivery equipment such as herbicide dis-
tribution equipment is calibrated by passing fluid into
a vessel 18 for a predetermined time and noting the
level reached by the fluid relative to a graduated
scale 40. The scale 40 is removably mounted rela-
tive to the vessel 18 and relates to a parameter other
than flow rate, for example spraying width. An appro-
priate scale is selected for sure in dependence on
other parameters of the intended use of the equip-
ment, such as the intended travel speed and the
nature of the fluid to be delivered. Herbicides may
be supplied in packages which include one or more
scales for use with the vessel 18.

FIG.4

## DEVICE FOR MEASURING FLOW

This invention relates to measurement and/or adjustment of flow in a fluid line and is particularly, although not exclusively, concerned with such measurement and/or adjustment of delivery equipment for herbicides.

Different herbicide formulations have different properties, and in particular their viscosities may be different. Thus, where herbicide is fed through a restrictor to a distribution element for distribution over the ground, the flow rates through the restrictor will not be the same for two different formulations. Furthermore, the flow rate of herbicide will vary from one piece of equipment to another, even when they are set to give the same nominal flow rate. Additionally, the flow rate of herbicide must be adapted to the nature of the herbicide, the level of infestation of the weeds to be controlled, the width of spraying and the speed at which the equipment is moved over the ground.

Modern herbicides are highly effective, and very small volumes of undiluted herbicide are often used, rather than the highly diluted formulations which have been used in the past. Consequently, for maximum effectiveness and efficiency, there must be very accurate control of the rate of delivery of the herbicide from the delivery equipment. It is not, in most cases, adequate merely to rely on a rough-and-ready setting of the equipment. European patent specification No. 0297803 discloses the calibration of herbicide delivery equipment, to establish accurate flow rates, by operating the equipment so that the fluid is delivered into a calibration vessel. The equipment is operated for a predetermined time, for example one minute, the volume of fluid delivered into the vessel is then determined by means of graduations provided on the vessel, and a calculation is performed to determine the actual flow rate of herbicide. The equipment is then adjusted, and the operation repeated, until a desired flow rate is achieved. The calibration vessel is provided with graduations which represent units of volume. Consequently, it is necessary for the operator to determine the volume to be expected during a test, on the basis of the delivery conditions, such as the type of herbicide, the spray width and walking speed. This determination, whether performed by calculation or by reference to tables, is prone to error, resulting in incorrect dosages of herbicide being applied.

According to one aspect of the present invention there is provided a package comprising a container of liquid to be dispensed at a predetermined flow rate by means of dispensing equipment, the package also comprising a graduated scale which is separable from the container for use with the dispensing equipment as an aid to establishing the predetermined flow rate.

By using a graduated scale dedicated to one particular herbicide, one possible source of error in determining the required flow rate can be avoided. The scale may, for example, comprise a support element such as a card on which appropriate information is printed; alternatively the scale may be printed on an adhesive label. It may be attached to the rest of the package, for example to the container, by any appropriate means, for example by means of a line of perforations. Alternatively, it may be contained in an envelope affixed to the container.

Preferably, the scale is a linear scale. Thus, the reading from the scale is taken directly from the level on the scale reached by the liquid during a calibration test, without any requirement for further calculation, interpolation or extrapolation.

Where the graduated scale is applied to a card, the card may comprise several graduated scales for different purposes. For example, the graduated scales may relate to different levels of infestation by the weed to be controlled, to different widths of spray, and to different speeds at which the delivery equipment is to be transported across the ground.

According to a second aspect of the present invention there is provided a method of achieving a required flow rate of fluid from fluid delivery equipment, comprising:

(a) selecting a graduated scale appropriate to predetermined delivery conditions, the scale bearing graduations representing delivery conditions other than flow rate,

(b) applying the selected graduated scale to a receiving vessel,

(c) discharging fluid from the equipment into the receiving vessel for a predetermined time,

(d) comparing the level of fluid in the receiving vessel with a region of the scale representing a required delivery condition,

(e) if necessary, emptying the receiving vessel, adjusting the flow rate of fluid from the delivery equipment, and repeating steps (c) and (d) until the level of fluid is at or approximately at the region of this scale representing the required delivery condition.

According to a third aspect of the present invention there is provided a kit of parts for use in the delivery of fluid in accordance with predetermined delivery conditions, the kit comprising:

(a) fluid delivery equipment,

(b) a receiving vessel for receiving fluid from the delivery equipment during assessment of the flow rate of the fluid delivered by the delivery equipment,

(c) a plurality of graduated scales, each appropriate to a specific set of predetermined delivery conditions, the graduated scales being selectively attachable to the receiving vessel.

For a better understanding of the present invention, and to show how it may be carried into effect, reference will now be made, by way of example, to the accompanying drawings, in which:

Figure 1 shows hand-held equipment for delivering a herbicide;

Figure 2 shows a measuring device for use in the equipment of Figure 1;

Figure 3 shows the measuring device at one stage of a calibration test;

Figure 4 shows the measuring device at another stage of the test;

Figure 5 shows graduated scales for use with the measuring device;

Figure 6 shows a specific embodiment of the measuring device shown diagrammatically in Figures 4 and 5;

Figure 7 is an enlarged partial view showing how the graduated scale is attached to the device;

Figure 8 shows the measuring device during normal use of the equipment;

Figure 9 shows a receiving vessel for use with the equipment of Figure 1 as an alternative to the measuring device of Figures 2 to 6;

Figure 10 shows a graduated scale for use with the receiving vessel;

Figure 11 is a partly sectional side view of a spraying head; and

Figure 12 is a view taken in the direction of the arrow XII in Figure 11;

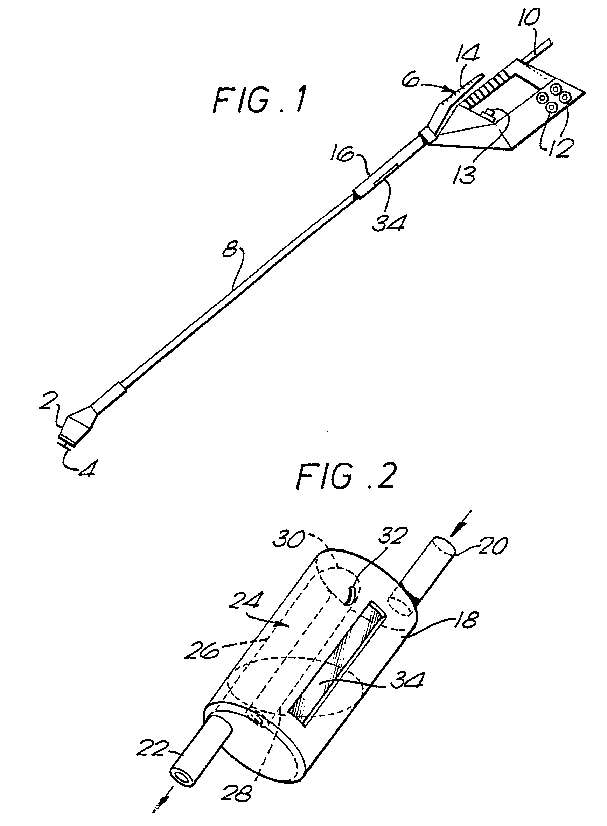

The equipment shown in Figure 1 comprises a spraying head 2 having a motor-driven distribution element 4 in the form of a disc. The spraying head 2 is connected to a handset 6 by a support tube 8. The handset 6 is connected to a container of herbicide to be delivered by a flexible tube 10. Also, the handset 6 has various control devices, including a knob 13 for controlling the speed of the disc 4.

In normal operation, operation of a trigger 14 opens a valve in the handset 6 to permit herbicide to flow through the tube 10, along a fluid supply duct accommodated within the support tube 8, to the spraying head 2, from which it is discharged as a series of droplets by the disc 4. By appropriate adjustment of the knob 13, it is possible to vary the speed of the disc 4, and consequently the width of spray. The rate of flow of the herbicide towards the spraying head 2 may be adjusted by means of a variable restriction located in the flow path.

By way of example, the speed of the disc 4 may be adjusted to give a spraying width of two feet (0.6m). For a selected speed of application such as a walking speed of 1.5 m.p.h. (2.4 km/h), the flow rate to the head 2 may be adjusted to give a flow suitable to produce the correct dose of the herbicide per area being covered, appropriate to, say, medium infestation of the weed to be controlled.

Before beginning spraying, it is desirable to check that the flow rate which is, in fact, supplied to the head 2 corresponds to the flow rate required if the necessary dose per area is to be achieved. For this purpose, there is provided in the embodiment shown in Figure 2 a measuring device. By way of example, this measuring device may be accommodated within a tubular member 16 projecting from the head 2, but it may alternatively be provided elsewhere within the support tube 8, or it may be mounted externally of the support tube 8. The measuring device must be located downstream of the variable restriction, and they can be separated on the support tube and at any positions along the support tube.

Figure 2 shows the measuring device in more detail. It comprises a housing 18 having an inlet spigot 20 and an outlet spigot 22 at opposite ends. These spigots 20, 22 receive flexible tubes for conveying the herbicide into and out of the measuring device.

The outlet spigot 22 is connected to a U-tube 24 disposed within the housing 18. The U-tube 24 has two limbs 26, 28 interconnected by a reverse bend 30. At the reverse bend 30, there is a vent hole 32 in the tube 24. The wall of the housing 18 includes a transparent region 34, which makes it possible to see the level of fluid within the housing 18, as will be discussed later.

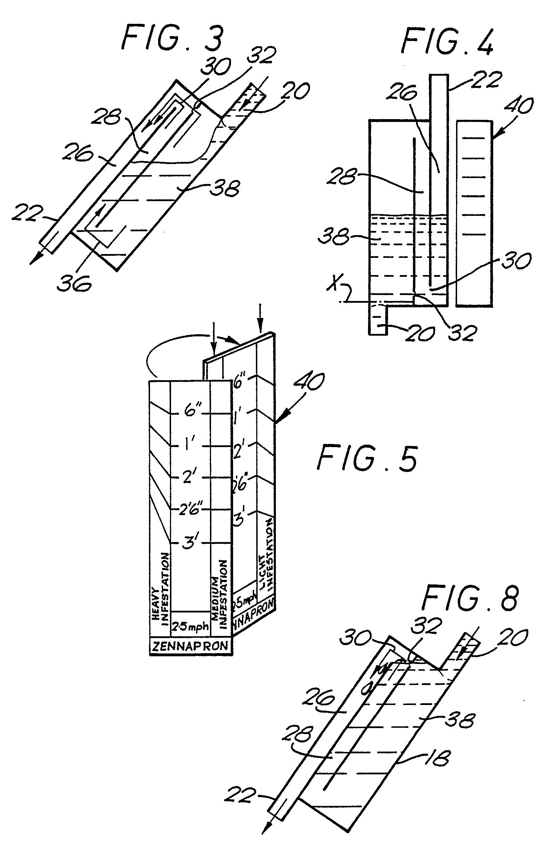

A graduated scale in the form of a card 40 is affixed to the equipment (shown diagrammatically in Figure 4), or to the housing 18, by any appropriate means, such as by means of a spring clip, suitable guides, or adhesive. It is positioned adjacent the transparent wall portion 34.

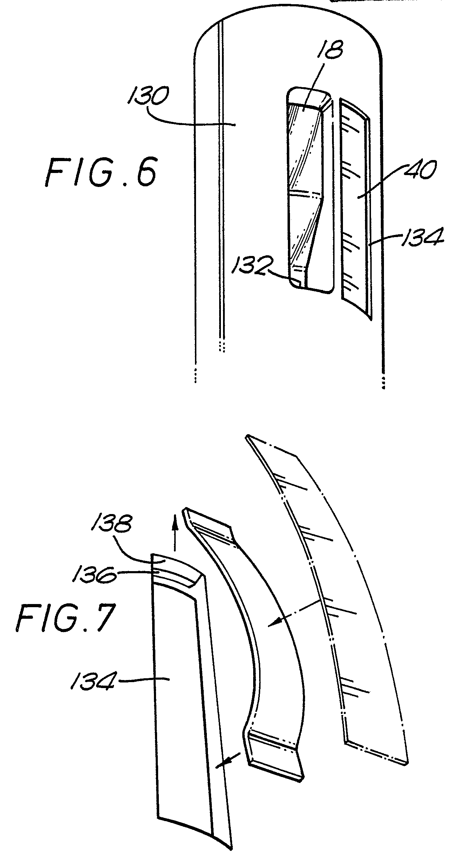

Figures 6 and 7 show a specific form of the housing 18, illustrating how the calibration card 40 is attached. The housing 18, made from transparent material, is accommodated in an opaque casing 130 having an aperture 132 through which part of the housing 18 is visible. Next to the aperture 132, the casing 130 has a shallow recess 134, which receives the card 40, so that the graduations are close to the visible wall of the housing 18. As shown in Figure 7, the recess 134 has slots 136 in its end walls 138. These slots receive the ends of the card 40 to retain the card 40 in the recess 134. The card itself is sufficiently flexible for it to be bent, as shown in Figure 7, for insertion into, and removal from, the recess 134. One of the side walls of the recess 134 may have a finger recess (not shown), to assist in removing the card 40.

The herbicide would be supplied to the user in a package which includes both a container of the herbicide and one or more of the cards 40. The card 40, having a linear scale, and provides a convenient means for achieving a flow rate appropriate to the prevailing conditions without requiring the operator to obtain a value for the flow rate, by performing complex calculations or referring to separate tables.

The card 40 is shown in greater detail in Figure 5. It is printed on both sides with scales corresponding to different levels of infestation by the weed which is to be controlled. These scales thus represent different required area densities of herbicide. The scales are graduated according to the spraying width which is to be used and relate to a specific speed. As shown, the cards are indicated as being suitable for use in connection with ZENNAPRON (Registered Trade Mark). The operator fixes the card 40 to the housing 18 with the appropriate edge of the scale adjacent the transparent region 34. As mentioned above, assuming a spraying width of two feet (0.6m), and the specific speed of, say, 2.5mph, the operator is able to establish a volume within the measuring device which corresponds to the desired flow rate to the head 2 in order to distribute the appropriate dose of the herbicide per unit area.

Thus, the operator needs merely to know whether there is light, medium or heavy weed infestation, the spraying width which is to be used, and the speed at which the operator intends to cover the area to be sprayed. By fixing the card 40 directly to the measuring device, the operator is able to establish directly the volume which should appear in the measuring device after a test cycle. If subsequently the same delivery equipment is to be used to distribute a different herbicide (or a composition for purposes other than weed killing), it is necessary only for the operator to remove the ZENNAPRON card and to replace it by the corresponding card from the new package. Of course, appropriate cleaning of the equipment may be necessary before changing over from one material to the other.

Figure 3 shows the measuring device in a diagrammatic manner, in use during a flow test. In order to calibrate the flow from the handset 6 to the head 2, the equipment is first primed, by operating it with the trigger 6 depressed until liquid is visible through the transparent region 34 in the housing 18. The equipment is then inverted (i.e. the head 2 is raised above the handset 6, with the support tube 8 substantially vertical), so that the measuring device assumes the position shown in Figure 4. The trigger 14 is then operated which permits the liquid to return through the tube 10 to the container. This continues until the level of liquid in the measuring device reaches the position X in Figure 4, which can be regarded as a zero position. The equipment is then returned to the normal orientation (Figure 3), and is operated for a predetermined time, such as 30 seconds. This predetermined time is chosen such that the housing 18 is not overfilled. During this time, assuming a normal flow rate of liquid, the liquid enters the limbs 38 and 28, but does not pass over the reverse bend 30 to the limb 26. As the level in the limb 38 rises, air is discharged to the outlet spigot 22 through the vent hole 32.

When the predetermined time of 30 seconds has elapsed, the trigger 14 is released and the equipment is inverted to the position shown in Figure 4. Liquid in the limbs 38 and 28 is then able to flow into the limb 26 through the vent hole 32 and across the reverse bend 30. The level of liquid in the measuring device is then read off directly against the linear scale on the card 40.

If the level of fluid in the device differs from that indicated by the card 40 (for example if the level of fluid is at a spray width marking other than that which the operator intends to use), the herbicide in the measuring device is returned to the container through the tube 10 by depressing the trigger 14, until the level returns to the level X. Appropriate adjustment of the variable restrictor is made and the test is then repeated as many times as are necessary in order to obtain a satisfactory correlation between the actual level in the measuring device and the reference level indicated by the card 40.

When an acceptable flow rate has been achieved, normal spraying can begin, and Figure 6 shows the measuring device during such normal operation. The herbicide fills the limbs 38 and 28 and overflows into the limb 26, to pass to the outlet 22 and the head 2. Also, a small amount of the herbicide may flow directly from the limb 38 to the reverse bend 30 through the vent hole 32.

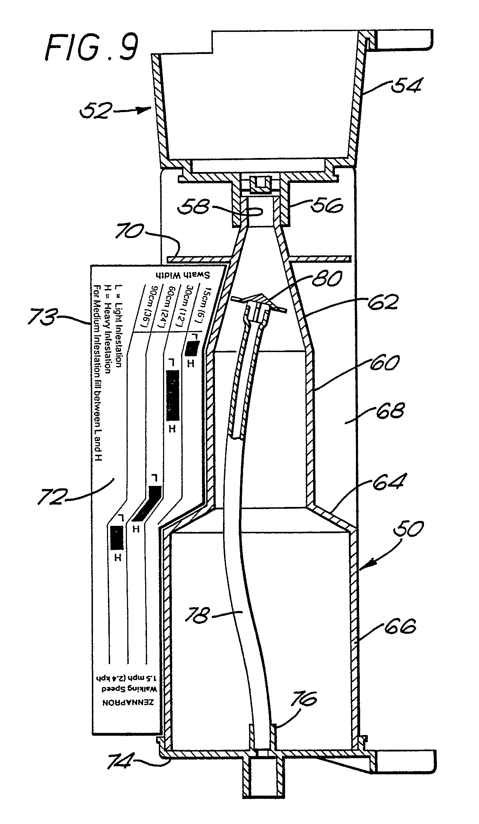

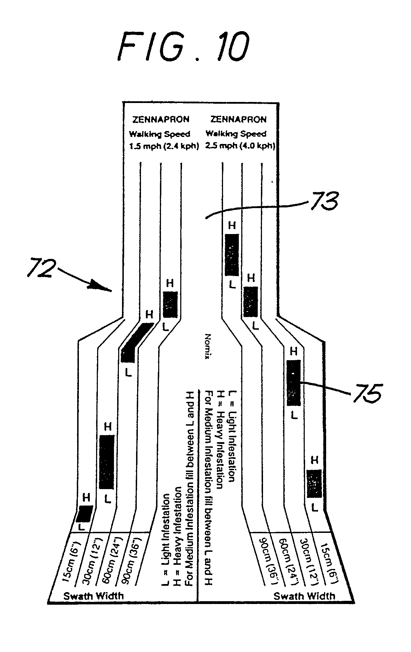

Figure 9 shows a calibration vessel 50 similar to that disclosed in European patent specification No. 0297803, provided with a card 72 printed with a graduated scale. The card 72 itself is shown in Figure 10. The vessel 50 is fitted to a spraying head (such as the spraying head 2 of Figure 1) by means of an intermediate component 52 which has a tapering side wall 54 to receive the spraying head 2. A nozzle 56 engages a spigot portion 58 of the vessel 50.

A small diameter region 60 of the vessel 50 is connected to the spigot portion 58 by a conical transition region 62. A further conical transition region 64 connects the small diameter portion 60 to a larger diameter portion 66 of the vessel 50. Radially extending webs 68, reinforced by a disc 70, extend along the small diameter region 60.

As shown in Figure 10, the card 72 is symmetrical in shape about a fold line 73. It is marked on each side of the fold line 73 with a scale correponding to a particular walking speed. The scale comprises several columns relating to different spraying widths, each column being marked with a band 75 indicating the range of fluid levels appropriate to that spraying width, depending on the level of weed infestation (i.e. the area density of herbicide required). The card 72 is fitted to the webs 68. In use, the card 72 is secured in a folded condition by a strip of double-sided adhesive tape extending along the card near a fold line 73. The free edges of the card 72 may then be passed over one of the web portions 68 in the region between the conical region 64 and the disc 70.

At the end of the vessel 50 away from the intermediate component 52, the larger diameter portion 66 is closed by a cap 74. A tubular spigot 76 extends inwardly from the cap 74 and receives a flexible tube 78 which is provided with a hood 80 at its other end.

For use, the intermediate component 52 is fitted to the spraying head 2, and fluid is delivered for a predetermined period such as one minute, or 30 seconds. The fluid flows over the hood 80 and collects at the bottom of the vessel, whilst air being displaced by the fluid is able to pass through the tube 78. The lance is then manipulated to invert the vessel 50, and the level of the fluid is read off the card 72.

Furthermore, use of cards 40 and 72 supplied with packages of herbicide or other materials is not confined to the establishment of a desired flow rate. For example, packages of fluids could be supplied with removable scales for use with measuring vessels in order to achieve a required volume for dilution purposes. Thus, a package of concentrated herbicide could include a removable card bearing a graduated scale representing different volumes of water, the cards being for use with a measuring device for dispensing the required volume of concentrated product to achieve the correct dilution in the indicated volume of water. In a particular embodiment of such a package, the measuring device comprises a cup mounted on a squeezable container for the product, the cup being connected to the container by means of a tube extending from the bottom of the container. A card, corresponding to the cards 40 and 72, is provided with the package. It may be removable from the rest of the package, and intended to be affixed adjacent the measuring cup, or it may be located on the package adjacent the measuring cup. By squeezing the container, the product is discharged to the measuring cup until the required volume is present in the measuring cup, after which the product can be poured from the measuring cup into the container, such as a watering can, in which it is to be diluted in the appropriate quantity of water.

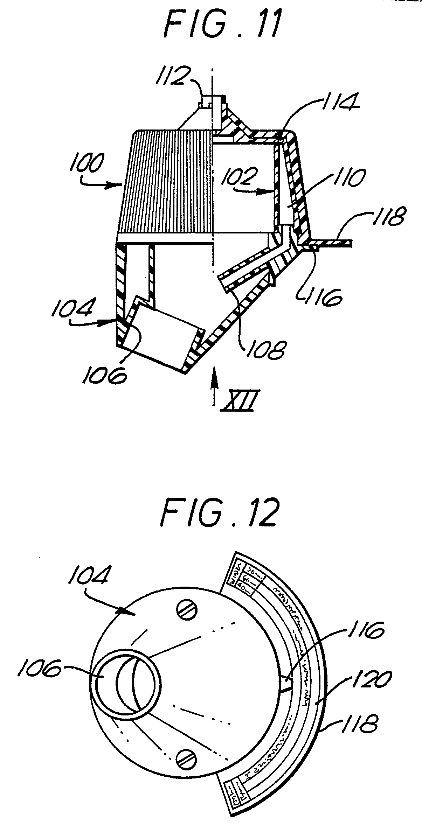

Another embodiment of the invention is shown in Figures 11 and 12. The spraying head shown in Figure 11 is described in greater detail in European Patent Specification No. 0195632. It comprises an outer component 100 which is rotatably mounted on an inner component 102, the inner component being secured to a connector 104. The connector 104 has a socket 106 for receiving the support tube 8, and a spigot 108 for receiving the fluid supply duct extending within the elongate support tube 8. A tapering cavity 110 in the inner member communicates with an outlet projection 112 via an aperture 114, in such a way that rotation of the outer member 100 changes the rate of flow of the fluid. A pointer 116 is provided on the connector 104, lying on a tab 118 which extends from the outer member 100, for the purpose of indicating the relative rotary position of the inner and outer components 102 and 100. A graduated scale 120, for example in the form of an adhesive label, may be removably mounted on the tab 118.

The scale 120, shown in Figure 12, is marked in a similar manner to the card 72. Several such scales may be supplied with a container of herbicide with which they are intended to be used. The scale 120 is appropriate to a particular walking speed, and marked with a band for each of several spraying widths. The band represents the range of positions of the pointer appropriate to the chosen spraying width, depending on the degree of weed infestation. For example, if there is a high level of infestation of weeds, the operator rotates the outer component 100 clockwise towards the fully opened position, until the pointer 116 is aligned with the far end region of the band, which is marked with "H". As an accuracy check, a test may be carried out using the receiving vessel of Figure 9.

Although the scales 72 and 120 have been described as being appropriate to one type of herbicide and one particular walking speed, and as being marked according to spraying width and required area density, these parameters may be used in other ways. For instance, a card supplied with a herbicide may have a scale appropriate to a particular spraying width, in which case it would be marked according to walking speed and the level of weed infestation. Alternatively a card may be suitable for use at a particular walking speed, and with a particular level of infestation. The card would then be marked according the required spraying width and the type of herbicide being used.

## Claims

1. A package comprising a container of liquid to be dispensed at a predetermined flow rate by means of dispensing equipment, the package also comprising a graduated scale which is separable from the container for use with the dispensing equipment as an aid to establishing the predetermined flow rate.

2. A package as claimed in claim 1 in which the liquid to be dispensed is a herbicide.

3. A package as claimed in claim 1 or 2, in which the scale is in the form of a card.

4. A package as claimed in any one of the preceding claims, in which the scale is in the form of an adhesive label.

5. A method of achieving a required flow rate of fluid from fluid delivery equipment, comprising:

(a) selecting a graduated scale appropriate to predetermined delivery conditions, the scale bearing graduations representing delivery conditions other than flow rate,

(b) applying the selected graduated scale to a receiving vessel,

(c) discharging fluid from the equipment into the receiving vessel for a predetermined time,

(d) comparing the level of fluid in the receiving vessel with a region of the scale representing a required delivery condition,

(e) if necessary, emptying the receiving vessel, adjusting the flow rate of fluid from the delivery equipment, and repeating steps (c) and (d) until the level of fluid is at or approximately at the region of this scale representing the required delivery condition.

6. A method as claimed in claim 5, in which the fluid is a herbicide.

7. A method as claimed in claim 5 or 6, in which the delivery conditions include one or more of the composition of the fluid, the speed of travel of the delivery equipment, the spray width and the area density of fluid required.

8. A method as claimed in any one of claims 5 to 7, in which the graduated scale is in the form of a card, which card is folded so as to be retained on a flange provided on the vessel.

9. A method as claimed in claim 8, in which the card is adhesively bonded to itself on opposite sides of the fold line to secure the card in the folded condition.

10. A method as claimed in any one of claims 5 to 9, in which the predetermined time is not less than 15 seconds and not more than one minute.

11. A kit of parts for use in the delivery of fluid in accordance with predetermined delivery conditions, the kit comprising:

(a) fluid delivery equipment,

(b) a receiving vessel for receiving fluid from the delivery equipment during estimation of the flow rate of the fluid delivered by the delivery equipment,

(c) a plurality of graduated scales, each appropriate to a specific set of predetermined delivery conditions, the graduated scales being selectively attachable to the receiving vessel.

12. Fluid delivery equipment comprising a supply duct for the supply of fluid from a container to a delivery member, the supply duct including a chamber for receiving fluid during a calibration test, the equipment having means for releasably attaching a graduated scale to the equipment adjacent the chamber for correlation of the level of fluid in the chamber with the graduated scale.

FIG . 1

FIG . 2

## FIG. 3

30 32
28
26 20
22 38
36

## FIG. 4

26 22
28
38
40
X 20 32 30

## FIG. 5

40

6"
1'
2'
2'6"
3'

6"
1'
2'
2'6"
3'

HEAVY INFESTATION
25 mph
MEDIUM INFESTATION
ZENNAPRON
NNAPRON
LIGHT INFESTATION
5 mph
40

## FIG. 8

30 32 20
26
38
28
18
22

FIG.6

130

18

40

134

132

FIG.7

138

136

134

**FIG.9**

ZENNAPRON
Walking Speed
1.5 mph (2.4 kph)

Swath Width

15cm (6")
30cm (12")
60cm (24")
90cm (36")

L = Light Infestation
H = Heavy Infestation
For Medium Infestation fill between L and H

H  H  H  H

# FIG . 10

## FIG . 11

## FIG . 12

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X<br>Y<br>A | US-A-4 663 960 (MAKKINK)<br>* Whole document *<br>--- | 1-3,5-7<br>,10<br>4<br>8,11,12 | G 01 F 25/00<br>A 01 M 7/00 |
| X<br><br>A | GB-A- 705 396 (PROTOTYPE DEVELOPMENTS LTD)<br>* Page 1, line 10 - page 4, line 127; figures *<br><br>--- | 1<br><br><br>3,5,7,8<br>,11,12 | |
| Y<br>A | EP-A-0 051 779 (S. GRAEF)<br>* Whole document *<br><br>--- | 4<br>5,7,10,<br>11 | |
| A | US-A-4 409 845 (STUFFLEBAM et al.)<br>* Column 2, line 27 - column 4, line 15; figures 1,5 *<br>--- | 1,2,5-7<br>,10,11 | **TECHNICAL FIELDS SEARCHED (Int. Cl.5)** |
| A | US-A-4 526 404 (VASQUEZ)<br>* Figures *<br>----- | 1,3,4,8 | G 01 F<br>A 01 M |

The present search report has been drawn up for all claims

| Place of search | Date of completion of the search | Examiner |
|---|---|---|
| THE HAGUE | 24-11-1989 | ROSE A.R.P. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)